# EUROPEAN PATENT APPLICATION

(11) **EP 4 528 584 A1**
(43) Date of publication of application: **26.03.2025**
(21) Application number: 23807099.9
(22) Date of filing: 10.05.2023
(51) Int. Cl.: G06K 19/06

(54) **CONSUMER PRODUCT COMPRISING OUTER PACKAGING WITH A VISIBLE CODE AND SYSTEM INCLUDING THE PRODUCT**

(30) Priority: 17.05.2022 ES 202230826 U
(71) Applicant: Nuevos Sistemas Technologicos S.L., 30100 Murcia (ES)
(72) Inventor: PITA LOZANO, Javier, 30100 Espinardo (Murcia) (ES); SAEZ MARTÍNEZ, Juan Manuel, 03690 San Vicente del Raspeig (Alicante) (ES)
(74) Representative: Balder IP Law, S.L.
(86) International application number: PCT/ES2023/070297
(87) International publication number: WO 2023/222934

(57) **Abstract**

The present invention relates to a consumer product (1) comprising outer packaging (2), said packaging (2) having a visible code (Q) and having a first colour (C1), a second colour (C2) and a third colour (C3), wherein the visible code (Q) consists of a matrix (QM) of square cells (QS) having cells (QS1) of the first colour (C1), cells (QS2) of the second colour (C2), and cells (QS3) or a frame surrounding the first group (QS1) and the second group of cells (QS2) of the third colour (C3), wherein the first colour (C1) is brighter than the second colour (C2). The invention further relates to a system including the product (1).

## Description

### TECHNICAL FIELD

The present invention relates to a consumer product having a packaging which in turn has a visible code, which allows using the printing colours typical of the product at hand, without thereby affecting the capacity of a device having a camera and a processor to identify the code.

### BACKGROUND

Visual markers (QR, Data Matrix, April Tags, Aruco, etc.) are usually monochromatic, i.e., they encode information using a foreground colour over a background, with said foreground colour having a high contrast with respect to said background. Techniques for detecting and decoding these markers are based on brightness, so the two most extreme colours within this characteristic are typically used, i.e., black for the foreground and white for the background.

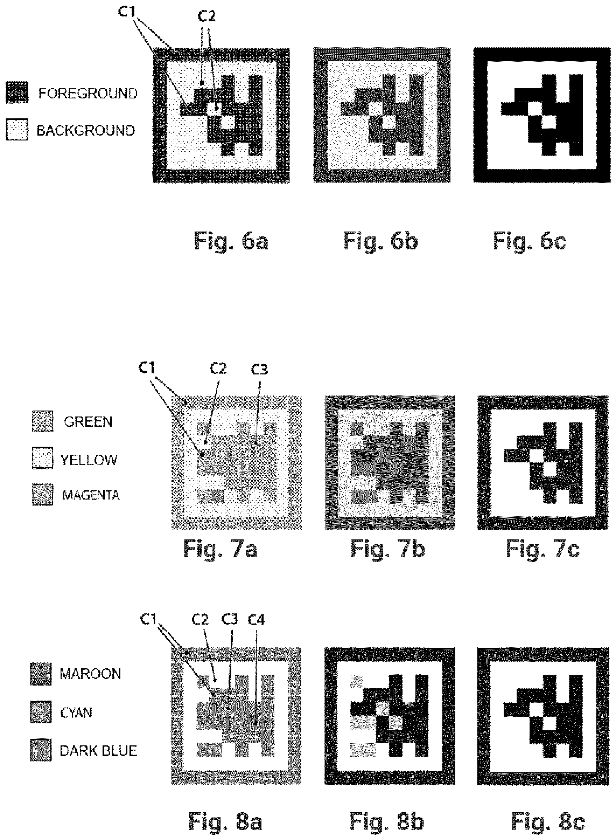

Algorithms convert the original image (Figure 6a) into a greyscale image (Figure 6b) in the marker reading process. Colour information is thereby discarded, reducing the image to its brightness component. The brightness image is binarized (Figure 6c) by means of a segmentation algorithm, whereby each pixel is labelled as either foreground or background.

The problem with using black over white in these codes is that they are not ideal in some cases despite being the two most widely used tones in printing. Sometimes, as a matter of branding, the manufacturer is unable to incorporate the code in its product because the black and white tones differ too much from its corporate colours. Other times there are physical limitations that prevent printing, such as the limitation to very specific inks (mass printing of products is usually performed with a very limited set of colour rollers, the expansion of which can greatly affect production price).

To that end, and as will be set forth below, the inventors propose a technique for colouring monochromatic markers which allows these drawbacks to be overcome without modifying the current techniques for reading these markers.

### DESCRIPTION OF THE INVENTION

To overcome the drawbacks of the state of the art, a first aspect of the present invention proposes a consumer product comprising an outer packaging, the outer packaging having a visible code and having a first colour, a second colour and a third colour, wherein each colour occupies a surface of the outer packaging and wherein the surface occupied by the first colour, the second colour and the third colour is larger than the surface occupied by other colours, characterised in that the visible code consists of a matrix of square cells:
- with a first group of cells being of the first colour;
- a second group of cells being of the second colour; and
- a third group of cells or a frame surrounding the first group and the second group of cells being of the third colour, wherein:
- the first colour has a brightness that is in a first range of brightness; and
- the second colour has a brightness that is in a second range of brightness, with the second range of brightness being brighter than the first range of brightness; and
wherein the third colour is in the first range of brightness or in the second range of brightness.

As explained above, the step prior to the detection of a monochromatic marker involves discarding the colour of the image (converting to greyscale) for subsequent result binarization by means of a segmentation algorithm. Generally, the different segmentation techniques use a (local or global) brightness threshold which determines whether each pixel is labelled as foreground or background. The marker is usually formed with black colour (foreground) and white colour (background) since they are the two colours in the visible spectrum having the highest brightness contrast.

The invention consists of using two tones, one for the foreground (which can also be referred to as false black) and another for the background (which can also be referred to as false white), that are different from black and white, but the difference in brightness of which is sufficient to perform detection.

This idea is based on the fact that the brightness of the image is discarded in the first reading step. Taking into account that one and the same brightness corresponds with many different shades, any of these shades can be used as long as the final brightness is similar. In the case of black and white, there are no other colours with the same brightness since they represent the maximum and the minimum brightness possible. However, detection is possible using tones the brightness contrast of which is below said maximum. Therefore, according to the invention, tones are selected so that the false white and the false black maintain a high enough brightness contrast, regardless of their colour.

In some embodiments, the code has a first outer frame and a second frame consecutive to the first outer frame, with the first outer frame being of the first colour and the second frame being of the second colour.

In some embodiments, the code has a first outer frame and a second frame consecutive to the first outer frame, with the first outer frame being of the third colour and the second frame being of the second colour, with the third colour being in the first range of brightness.

In some embodiments, the code has a first outer frame and a second frame consecutive to the first outer frame, with the first outer frame being of the second colour and the second frame being of the first colour.

In some embodiments, the code has a first outer frame and a second frame consecutive to the first outer frame, with the first outer frame being of the second colour and the second frame being of the third colour, with the third colour being in the first range of brightness.

In some embodiments, the packaging also has a fourth colour which is in the first range of brightness or in the second range of brightness, with a fourth group of cells being of the fourth colour.

Another aspect of the invention relates to a system comprising a product according to any of the variants described above, and a device having a camera and a processor, the processor being configured to assign a first value to the colours corresponding to the first range of brightness and to assign a second different value to the colours corresponding to the second range of brightness, such that a binary code can be obtained from a code consisting of three or more colours.

The different aspects and embodiments of the invention defined above may be combined together, provided that they are mutually compatible.

Additional advantages and features of the invention will become apparent from the detailed description that follows and will be particularly indicated in the attached claims.

### BRIEF DESCRIPTION OF THE DRAWINGS

As a complement to the description, and for the purpose of helping to make the features of the invention more readily understandable, in accordance with practical exemplary embodiments of the invention, said description is accompanied by a set of figures which, by way of illustration and not limitation, represent the following:
Figure 1 shows a consumer product according to the invention.
Figures 2 to 5 show several embodiments of the multicolour code included in the consumer product according to the invention.
Figures 6a to 6b show the binarization process carried out in a known manner.
Figures 7a to 7b illustrate the binarization process for an example of a multicolour code according to the invention.
Figures 8a to 8b illustrate the binarization process for another example of a multicolour code according to the invention.

### DESCRIPTION OF A PREFERRED EMBODIMENT OF THE INVENTION

In the description of the possible preferred embodiments of the invention, numerous details must be provided to better understand the invention. Even so, it will be apparent to the person skilled in the art that the invention can be implemented without these specific details. On the other hand, well-known features have not been described in detail to avoid unnecessarily complicating the description.

As can be seen in the figures, the invention relates to a consumer product 1 comprising an outer packaging 2.

This product can be a packet of cereals, medicine, a bottle, a cosmetic product, sporting goods, or any product that can be packed with a packaging capable of supporting at least three colours.

The outer packaging 2 is known to have a visible code Q and a first colour C1, a second colour C2 and a third colour C3, wherein each colour occupies one surface of the outer packaging and wherein the surface occupied by the first colour C1, the second colour C2 and the third colour C3 is larger than the surface occupied by other colours, i.e., the packaging is characterised by three main colours, which is the most common, although it may consist of more colours that should, however, be considered as minor colours in the general impression of the product.

With respect to the visible code, it is a code which contains information relating to the product.

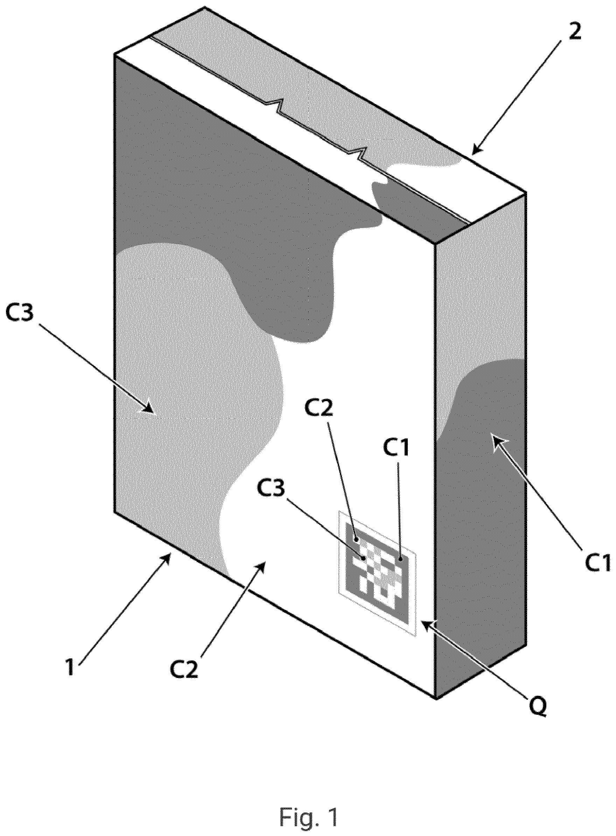

According to a preferred embodiment illustrated in Figure 1, the visible code Q consists of a matrix QM of square cells QS:
- with a first group of cells QS1 being of the first colour C1;
- a second group of cells QS2 being of the second colour C2; and
- a third group of cells QS3 being of the third colour C3, wherein:
- the first colour C1 has a brightness that is in a first range of brightness; and
- the second colour C2 has a brightness that is in a second range of brightness, with the second range of brightness being brighter than the first range of brightness; and
wherein the third colour C3 is in the first range of brightness or in the second range of brightness.

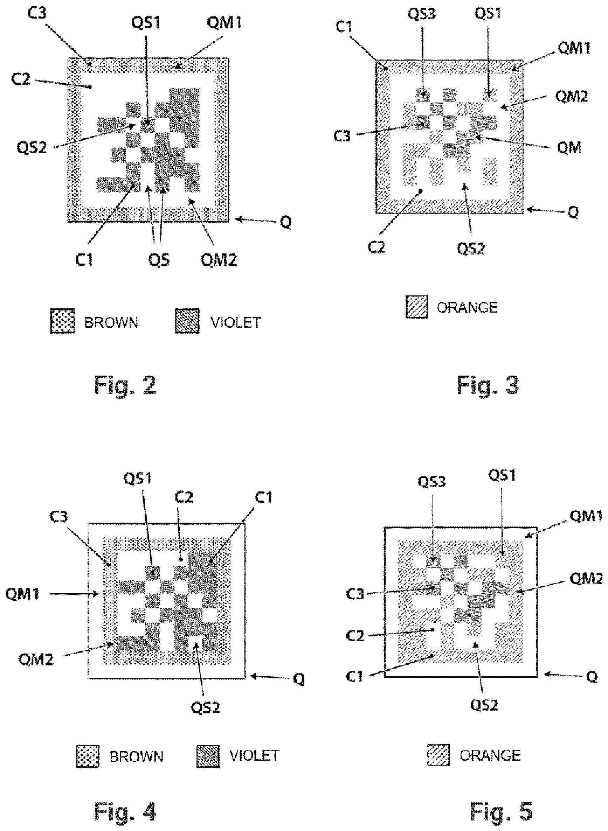

As illustrated in Figure 3, according to another embodiment, the code Q has a first outer frame QM1 and a second frame QM2 consecutive to the first outer frame QM1, with the first outer frame QM1 being of the first colour C1 and the second frame QM2 being of the second colour C2.

As illustrated in Figure 2, the code Q has a first outer frame QM1 and a second frame QM2 consecutive to the first outer frame QM1, with the first outer frame QM1 being of the third colour C3 and the second frame QM2 being of the second colour C2, with the third colour C3 being in the first range of brightness.

As illustrated in Figure 5, the code Q has a first outer frame QM1 and a second frame QM2 consecutive to the first outer frame QM1, with the first outer frame QM1 being of the second colour C2 and the second frame QM2 being of the first colour C1.

As illustrated in Figure 4, the code Q has a first outer frame QM1 and a second frame QM2 consecutive to the first outer frame QM1, with the first outer frame QM1 being of the second colour C1 and the second frame QM2 being of the third colour C3, with the third colour C3 being in the first range of brightness.

As illustrated in Figure 8a, the packaging also has a fourth colour C4 which is in the first range of brightness or in the second range of brightness, with a fourth group of cells being of the fourth colour C4.

The invention further relates to a system comprising a product 1 according to any of the preceding claims, and a device having a camera and a processor, the processor being configured to assign a first value to the colours corresponding to the first range of brightness and to assign a second different value to the colours corresponding to the second range of brightness value, such that a binary code can be obtained from a code consisting of three or more colours C1, C2, C3, C4. This process is illustrated in Figures 7a to 7c and 8a to 8c for two different examples.

Figures 7a to 8c show several examples of the proposed colours. First (7a), a colour mapping is applied by replacing black with a dark colour (with very low brightness) and white with yellow and cyan (with very high brightness). Discarding the colour and switching to greyscale (second column 7b) show the actual information with which the segmentation algorithm works which, in this case, is very similar to the use of pure black and white. Therefore, the result of the segmentation (third column 7c) is the same as when the original black and white tones are used.

Therefore, according to the invention, it is not necessary to only replace one tone with another tone, rather several tones with a similar brightness can be used. Specifically, in Figure 7a, black is replaced with dark green and white with two light tones: yellow and magenta. In this case, when converting to grey tones (Figure 7b), it can be seen that there are several light tones, but when segmenting (Figure 7c), the algorithm groups the two light tones into one, since they are more similar to one another compared to the other much darker tone.

The same idea can be applied to false black and false white at the same time, using two colours for each, as long as the two colours of each group are similar to one another and different from the other group in terms of illumination.

Figures 8a to 8c show another example in which two dark colours (maroon and blue) have been used to represent false black and two light colours (cyan and white) to represent false white. As can be seen, the result of the segmentation (Figure 8c) is the same as in the preceding cases.

Generally, the proposal allows using any number of colours to represent both false black and false white, as long as the colours of one and the same group have similar brightness but maintain a high contrast between the two groups.

In view of this description and figures, the person skilled in the art may understand that the invention has been described according to some preferred embodiments thereof, but that multiple variations may be introduced in said preferred embodiments, without leaving the object of the invention as claimed.

In this text, the term "comprise(s)" and its derivations (such as "comprising", etc.) should not be understood in an exclusive sense. That is to say, these terms should not be interpreted as excluding the possibility that what is described and defined may include more elements, stages, etc.

## Claims

1. A consumer product (1) comprising an outer packaging (2), the outer packaging (2) having a visible code (Q) and having a first colour (C1), a second colour (C2) and a third colour (C3), wherein each colour occupies a surface of the outer packaging and wherein the surface occupied by the first colour (C1), the second colour (C2) and the third colour (C3) is larger than the surface occupied by other colours, **characterised in that** the visible code (Q) consists of a matrix (QM) of square cells (QS):
- with a first group of cells (QS1) being of the first colour (C1);
- a second group of cells (QS2) being of the second colour (C2); and
- a third group of cells (QS3) or a frame surrounding the first group (QS1) and the second group of cells (QS2) being of the third colour (C3), wherein:
- the first colour (C1) has a brightness that is in a first range of brightness; and
- the second colour (C2) has a brightness that is in a second range of brightness, with the second range of brightness being brighter than the first range of brightness; and
wherein the third colour (C3) is in the first range of brightness or in the second range of brightness.

2. The product according to claim 1, wherein the code (Q) has a first outer frame (QM1) and a second frame (QM2) consecutive to the first outer frame (QM1), with the first outer frame (QM1) being of the first colour (C1) and the second frame (QM2) being of the second colour (C2).

3. The product according to claim 1, wherein the code (Q) has a first outer frame (QM1) and a second frame (QM2) consecutive to the first outer frame (QM1), with the first outer frame (QM1) being of the third colour (C3) and the second frame (QM2) being of the second colour (C2), with the third colour (C3) being in the first range of brightness.

4. The product according to claim 1, wherein the code (Q) has a first outer frame (QM1) and a second frame (QM2) consecutive to the first outer frame (QM1), with the first outer frame (QM1) being of the second colour (C2) and the second frame (QM2) being of the first colour (C1).

5. The product according to claim 1, wherein the code (Q) has a first outer frame (QM1) and a second frame (QM2) consecutive to the first outer frame (QM1), with the first outer frame (QM1) being of the second colour (C1) and the second frame (QM2) being of the third colour (C3), with the third colour (C3) being in the first range of brightness.

6. **The** product according to any of the preceding claims, wherein the packaging also has a fourth colour (C4) which is in the first range of brightness or in the second range of brightness, with a fourth group of cells being of the fourth colour (C4).

7. A system comprising a product (1) according to any of the preceding claims and a device having a camera and a processor, the processor being configured to assign a first value to the colours corresponding to the first range of brightness and to assign a second different value to the colours corresponding to the second range of brightness, such that a binary code can be obtained from a code consisting of three or more colours (C1, C2, C3, C4).
